# EUROPÄISCHE PATENTANMELDUNG

(11) **EP 4 258 194 A1**
(43) Veröffentlichungstag der Anmeldung: **11.10.2023**
(21) Anmeldenummer: 22166530.0
(22) Anmeldetag: 04.04.2022
(51) Int. Cl.: G06Q 10/08, H04W 4/029, G06V 20/52

(54) **VERFAHREN UND SYSTEM ZUM KONTROLLIEREN EINER BEWEGUNG VON TRANSPORTEINHEITEN**

(71) Anmelder: Siemens Logistics GmbH, 90429 Nürnberg (DE)
(72) Erfinder: EBIGT, Jochen, 47259 Duisburg (DE); JAHN, Lars, 91096 Möhrendorf (DE); MUECK, Dr. Bengt, 90429 Nürnberg (DE); KLEIN, Matthias, 63456 Hanau (DE)
(74) Vertreter: Siemens Patent Attorneys

(57) **Zusammenfassung**

Die Erfindung betrifft ein Verfahren und System zum Kontrollieren einer Bewegung von Transporteinheiten (2.1, 2) innerhalb eines Kontrollbereichs (4) einer Anlage. Zunächst wird eine Transporteinheit (2.1 an bekannter Position initial erfasst und identifiziert. Im weiteren Verlauf wird die Transporteinheit (2.1) bewegt und die Positionen der Transporteinheiten (2.1, 2) innerhalb des Kontrollbereichs (4) über einen zeitlichen Verlauf mit einem Positionserfassungsmittel (8) fortlaufend erfasst und an ein Hintergrundsystem übermittelt. Durch das Hintergrundsystem werden ausgehend von der initialen Position die erfassten Positionen der Transporteinheiten (2.1, 2) zu der erfassten Identität der betreffenden Transporteinheit (2.1, 2) zugeordnet und die Positionen der Transporteinheiten (2.1, 2), insbesondere der identifizierten Transporteinheit (2.1), in dem Kontrollbereich (4) abgebildet. Dies erlaubt eine Kontrolle der Bewegung, ohne dass eine für das Positionserfassungsmittel (8) gesonderte Markierung der Transporteinheit (2, 2.1) erforderlich ist.

## Beschreibung

Die vorliegende Erfindung bezieht sich auf ein Verfahren und System zum Kontrollieren einer Bewegung von Transporteinheiten.

Die vorliegende Erfindung betrifft insbesondere das technische Gebiet des Transports von Transporteinheiten innerhalb eines Flughafens für Gepäckstücke und Stückgüter, insbesondere Container wie Unit Load Devices (ULDs). Das erfindungsgemässe Verfahren und System eignet sich jedoch auch für eine breite Anwendung in anderen Logistikbereichen mit anderen Transporteinheiten. Eine Transporteinheit oder logistische Einheit ist eine individuell zusammengestellte Sammlung von Ladeeinheiten wie Stückgütern (im Flughafenbereich insbesondere Gepäckstücke und Cargogüter) zum Zwecke des Transports und/oder der Zwischenlagerung, typischerweise eine Palette, ein Container oder eine Transportwanne. Aber auch nur ein einziges Stückgut (mit oder ohne Transporthilfsmittel wie ULD, Palette, Gefässe, ...) kann bereits eine Transporteinheit bilden.

Viele Bereiche von Logistikbetrieben wie in Flughäfen werden manuell oder im Mischbetrieb automatisch-manuell bearbeitet unter Verwendung manueller Förderelemente wie Castorflächen, Kugelrollenflächen, Slave-Paletten o.ä. zum Bewegen von Transporteinheiten (Ladeeinheiten, ULDs, größere Transportgüter, o.ä.). Diese manuellen Förderelemente kommen zum Be- und Entladen sowie zum innerbetrieblichen Transport und zur Speicherung und Sortierung von Transporteinheiten zum Einsatz. Sie sind modular, daher hoch flexibel und sind günstig in der Auslegung auf Spitzenlasten, allerdings sind die

Möglichkeiten zur computerunterstützten technische Materialverfolgung begrenzt.

Das Ausrüsten aller Transporteinheiten mit jeweils eigenen RFID-Tags oder ähnlichen Mitteln ermöglicht zwar eine Nachverfolgung, aber es werden Sensoren zur Erfassung der RFID-Tags benötigt und zudem müssen die Transporteinheiten bei jedem Ein- und Ausbringen in die Anlage erfasst bzw. ausgebucht werden, da keine etablierten, flughafenübergreifenden Systeme existieren.

Stand der Technik ist ein punktuelles Erfassen von Transporteinheiten sowie allenfalls ihren Ladeeinheiten durch Handscanner oder Bedientastaturen an Knotenpunkten, insbesondere beim Einbringen in einen automatischen Anlagebereich oder beim Be- und Entladen einer Transporteinheit. Hierdurch können z.B. Stückgüter, die in eine ULD eingeladen wurden mit dieser ULD in Verbindung gebracht werden. Das Verfahren ist aber komplett manuell, d.h. auch fehleranfällig, da sie korrekte Eingaben des Bedienpersonals erfordern.

Nur in dem Erfassungsmoment und im automatischen Transportbereich ist der Ort (Scanpunkt) der Transporteinheit bekannt. Wird die erfasste Transporteinheit innerhalb der Anlage von ihrem Erfassungsort oder aus dem automatischen Bereich wegbewegt, liegen keine weiteren Informationen vor und die Position der Transporteinheit ist im IT-System nicht abgebildet. Welche Container von welchem Eingang zu welchem weiteren Punkt geschoben werden, ist digital nicht abgebildet. Auch die Position geparkter Container ist nicht erfasst. Somit kann der manuelle Bereich von einem IT-System nicht verwaltet werden, da die eindeutige Position der Ladeeinheit nicht bekannt ist. Dies ist problematisch da Transporteinheiten innerhalb des manuellen Bereichs verloren oder vergessen gehen können. Das Wiederauffinden ist mit zeitlichem und personellen Mehraufwand verbunden, insbesondere wenn dadurch ULDs nicht mehr ihren vorhergesehenen Flug erreichen. Daher besteht Bedarf an einer verbesserten Positionsnachverfolgung, insbesondere bei manueller Bewegung der Transporteinheiten.

Der vorliegenden Erfindung liegt daher die Aufgabe zugrunde, ein Verfahren und System zur Kontrolle von Transporteinheiten in einer Anlage bereitzustellen, welche mit geringem apparativem Aufwand eine Abbildung der Positionen von manuell bewegten Transporteinheiten und dadurch eine Kontrolle der Bewegung der Transporteinheiten in einem IT-System erlauben. Diese Aufgabe wird durch die in den unabhängigen Ansprüchen angegebenen Merkmale gelöst.

Die erfindungsgemäße Lösung betrifft ein Verfahren zum Kontrollieren einer Bewegung von Transporteinheiten mit zugeordneten Sortierkriterien innerhalb eines Kontrollbereichs einer Anlage mit den nachfolgenden Verfahrensschritten. Erstes Erfassen von Identität und Zeitstempel einer oder mehrerer Transporteinheiten an bekannter, initialer Position (gleiche oder unterschiedliche Position für unterschiedliche Transporteinheiten). Das erste, initiale Erfassen von Identität und Zeitstempel erfolgt insbesondere in Zusammenhang mit einem Einbringen der entsprechenden Transporteinheit in den Kontrollbereich. Bewegen mindestens einer der Transporteinheiten, insbesondere der identifizierten Transporteinheit. Erfassen der Positionen der Transporteinheiten innerhalb des Kontrollbereichs über einen zeitlichen Verlauf mit einem Positionserfassungsmittel ausgestaltet zum Erfassen von Positionen von Transporteinheiten ohne dass eine gesonderte Markierung der Transporteinheiten erforderlich ist. Fortlaufendes Übermitteln der erfassten Daten an ein Hintergrundsystem. Fortlaufendes Zuordnen der erfassten Positionen der Transporteinheiten zu der erfassten Identität der betreffenden Transporteinheit durch das Hintergrundsystem ausgehend von der initialen Position. Abbilden der Positionen und/oder Positionsänderungen der Transporteinheiten, insbesondere der identifizierten Transporteinheit, in dem Kontrollbereich durch das Hintergrundsystem.

Hinsichtlich einer Vorrichtung wird die vorstehend genannte Aufgabe gelöst durch ein System zum Kontrollieren einer Bewegung von Transporteinheiten mit zugeordneten Sortierkriterien in einer Anlage. Das System umfasst ein Mittel zum Erfassen von Identität und Zeitstempel einer oder mehrerer Transporteinheiten an bekannter, initialer Position. Das System umfasst ein Positionserfassungsmittel ausgestaltet zum Erfassen von Positionen von Transporteinheiten innerhalb des Kontrollbereichs über einen zeitlichen Verlauf ohne dass eine gesonderte Markierung der Transporteinheiten erforderlich ist. Das System umfasst ein Mittel zum Übertragen der erfassten Daten an ein Hintergrundsystem, wobei das Hintergrundsystem ausgestaltet ist zum fortlaufenden Zuordnen der erfassten Positionen der Transporteinheiten zu der erfassten Identität der betreffenden Transporteinheit und zum Abbilden der erfassten Positionen der identifizierten Transporteinheiten. Das System ist ausgestaltet zur Durchführung des erfindungsgemäßen Verfahrens.

Die Vorrichtung weist, soweit übertragbar, die gleichen Vorteile auf, welche bezüglich des vorgestellten Verfahrens aufgeführt sind. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Insbesondere sind diese Merkmale jeweils einzeln und in beliebiger geeigneter Kombination mit dem erfindungsgemäßen Verfahren, der erfindungsgemäßen Funktionseinheit und der erfindungsgemäßen Sortieranlage kombinierbar. So sind Verfahrensmerkmale auch als Eigenschaft der entsprechenden Vorrichtungseinheit gegenständlich formuliert zu sehen und umgekehrt.

So können sich die folgenden Vorteile zusätzlich ergeben:
Die erfindungsgemäße Lösung zeichnet sich dadurch aus, dass das Hintergrundsystem in der Lage ist, zu jeder Erfassungszeit die Position jeder identifizierten, aber auch (noch) nicht identifizierter Transporteinheiten in ihrem Erfassungsbereich abzubilden. Somit können erfasste und nicht erfasste Transporteinheiten lokalisiert werden. Ausgehend von der bekannten Initialposition des ersten Erfassens erfolgt durch fortlaufenden Abgleich eine weitere Positionsbestimmung, das Hintergrundsystem erstellt ein Bewegungsabbild des Kontrollbereichs. Fortlaufend ist eine Abbildung der Positionsänderungen aller Transporteinheiten samt zugehöriger erfasster oder unbekannter Identität der Transporteinheit möglich. Die Kenntnis der Positionen erlaubt eine Kontrolle des Erfassungsbereichs. Ausgehend von der initialen ersten Erfassung erfolgt ein automatisiertes Tracking der Bewegung von Transporteinheiten innerhalb des Kontrollbereichs.

Die erfindungsgemäße Lösung ermöglicht eine Positionskontrolle, ohne dass weitere Schritte zur Erfassung der Identität der Transporteinheit erfolgen müssen - der normale Ablauf wird nicht beeinträchtigt. Die bewegten Transporteinheiten müssen nicht mit eigenen Detektionselementen (RFID-Tags, Peilsensoren o.ä.) ausgestattet werden. Manuell durchgeführte Bewegungen sind digitalisierbar. Die Lösung ist zudem einfach nachrüstbar, sowohl in Indoor-Anlagen als auch in Outdoor-Anlagen. Die einzigen für einen Retrofit erforderlichen Komponenten sind Positionserfassungsmittel und Hintergrundsystem.

Vorteilhafte Ausgestaltungen der Erfindung ergeben sich aus den Unteransprüchen.

Gemäß einer Ausführungsform kann das Positionserfassungsmittel einen Lidar-Einheit (LIght Detection And Ranging) und/oder ein Kamerasystem (insbesondere optische und/oder TOF-Kameras) und/oder ein Lichtgitter und/oder einen optischen Sensor (z.B. Makrosensor, photoelektrischer Sensor, Lichtschranke, Lichtgitter, Lichttaster o.ä.) umfassen. Als Positionserfassungsmittel eignen sich sämtliche Systeme, die in der Lage sind, im Erfassungsbereich einzelne Transporteinheiten voneinander abzugrenzen, d.h. der erfasste Kontrast der Abbildung muss ausreichend sein, um einzelne Transporteinheiten eindeutig abzubilden. Zudem muss die Position der erfassten Transporteinheiten der realen Position im Raum zuordenbar sein.

Gemäß einer Ausführungsform kann ein Erfassen einer Form (2D oder 3D) der identifizierten Transporteinheit(en), aber auch allfälliger nicht-identifizierter Transporteinheiten, innerhalb des Kontrollbereichs über einen zeitlichen Verlauf (mit derselben oder einer unterschiedlichen Erfassungsrate wie bei der Positionserfassung) mit dem Positionserfassungsmittel oder einer anderen Vorrichtung ausgestaltet zum Erfassen und somit Verfolgen einer Form (Volumen bzw. Ausdehnung) von Objekten, insbesondere von Transporteinheiten erfolgen. So können Be- und Entladevorgänge abgebildet werden, aber es können auch Beschädigungen der Transporteinheiten festgestellt werden.

Gemäß einer weiteren Ausführungsform kann das Hintergrundsystem Abweichungen der erfassten Form der Transporteinheiten, insbesondere der identifizierten Transporteinheit, zu unterschiedlichen Erfassungszeiten erkennen und mit einer Meldung signalisieren und/oder speichern. So können nichtbeabsichtigte Abweichungen (z.B. Beschädigungen), aber auch beabsichtigte Abweichungen (z.B. Bestätigung, dass Be-/Entladung stattgefunden hat) zum vorhergehenden Zustand abgebildet werden.

Gemäß einer weiteren Ausführungsform kann ein Be- und/oder Entladen einer Transporteinheit mit einer oder mehreren Ladeeinheiten innerhalb des Kontrollbereichs ebenso wie die Bewegung der Transporteinheit vom Hintergrundsystem überwacht werden. Die initiale Position der Ladeeinheit wird erfasst und durch die fortlaufende Positionsüberwachung ist auch die Position jeder identifizierten Ladeeinheit in der Transporteinheit vom Hintergrundsystem abgebildet.

Gemäß einer weiteren Ausführungsform kann für effiziente Ladevorgänge die Be- und/oder Entladung mit Bewegungsbefehlen gesteuert werden. Alle für das Verfahren beschriebenen auf die Transporteinheit bezogenen Verfahrensschritte und Merkmale sind auch auf die Ladeeinheit anwendbar.

Gemäß einer weiteren Ausführungsform kann im Hintergrundsystem stattfinden Überprüfen einer Verweildauer der identifizierten und/oder erfassten Transporteinheiten in dem Kontrollbereich, bzw. wenn die Verweildauer in mehreren Kontrollbereichen bekannt ist in der Anlage, und Signalisieren eines Überschreitens der Verweildauer über einen vorbestimmten Wert (je nach Aufgabenstellung/Anwendung kann dieser unterschiedlich sein) mit einer Meldung. So wird ein Vergessen oder ein zu langer Verbleib von Transporteinheiten in den Kontrollbereichen der Anlage verhindert (verderbliche Ware, Medikamente, ...), u.a. selbst wenn das initiale Erfassen versehentlich nicht erfolgt ist.

Gemäß einer weiteren Ausführungsform kann ein Erfassen von weiteren Objekten im Kontrollbereich mit dem Positionserfassungsmittel oder einer anderen Vorrichtung ausgestaltet zum Erfassen von weiteren Objekten, insbesondere bewegten Objekten wie Personen, und Übermitteln der erfassten Daten an das Hintergrundsystem erfolgen. Hierbei kann das Hintergrundsystem oder die erfassende Vorrichtung ausgestaltet sein zum Erkennen und allenfalls Klassifizieren der erfassten weiteren Objekte. Zudem kann eine Warnung ausgegeben werden, falls das weitere Objekt in unmittelbarer Nähe einer Transporteinheit angeordnet ist. Dies erlaubt ein sicheres Abgrenzen von Transporteinheiten vom Bedienpersonal. Manipulation der ULD können während des Stattfindens erkannt werden. Zugangsabsicherungen können über Belegungsverbote für Objekte (bei Missachten Ausgabe einer Warnung) eingerichtet und automatische Bewegungen derjenigen Transporteinheiten in unmittelbarer Nähe des erkannten Objektes eingeschränkt werden.

Gemäß einer weiteren Ausführungsform kann das Hintergrundsystem Anweisungen erteilen für eine beabsichtigte Bewegung der identifizierten Transporteinheit, wobei diese Anweisungen von Bedienpersonal und/oder automatisiert realisiert werden können. Vorzugsweise kann das Hintergrundsystem Abweichungen zwischen der beabsichtigten und tatsächlich erfassten Bewegung erkennen und mit einer Meldung signalisieren. Die Anweisungen können bestimmt werden in Abhängigkeit vom Sortierkriterium der identifizierten Transporteinheit und in Abhängigkeit von der Anordnung und/oder Bewegungsbefehlen der übrigen Transporteinheiten innerhalb des Kontrollbereichs. Dieser Bewegungsbefehl kann spezifische Bewegungsanweisungen umfassen, aber auch eine einfache Anweisungen wie das Endziel sein - dann werden nur allzu große Entfernungen vom Endziel signalisiert. Die Anweisungen können von Bedienpersonal im manuellen Betrieb ausgeführt werden. Bei Anlagen mit automatisiert bewegbaren Transporteinheiten können auch die entsprechenden Fördervorrichtungen (Transportfahrzeuge, z.B. Gabelstapler, AGVs und/oder Fördermittel, z.B. Transportbänder, ...) direkt angesteuert werden. So können Transportaufträge übermittelt werden und ein in der Nähe der zu bewegenden Transporteinheit befindliches Transportfahrzeug kann die Anweisung ausführen. Damit ist ein Einbeziehen und Steuern der manuellen Prozesse durch das Hintergrundsystem möglich. Die Fördervorrichtung kann von der Transporteinheit umfasst sein.

Gemäß einer Ausführungsform kann ein Aufteilen des Kontrollbereichs in Unterbereiche und Zuordnen von universellen oder Transporteinheit-spezifischen Belegungsverboten (d.h. keine Transporteinheit darf in diesen Unterbereich bewegt werden) zu einem oder mehreren der Unterbereiche und/oder Anzeigen von freien und/oder besetzten Unterbereichen erfolgen.

Für die Bewegungsanweisungen werden selbstverständlich Belegungsverbote sowie der Füllgrad der Unterbereiche berücksichtigt sowie die erfasste Anwesenheit von (bewegten) Objekten (Transporteinheiten oder andere) in oder in der Nähe der Unterbereiche. Zudem können die Sortierziele bzw. beabsichtigten Bewegungen anderer Transporteinheiten aufeinander optimiert werden.

Gemäß einer Ausführungsform kann die Anlage zwei oder mehr Kontrollbereiche mit unterschiedlichen Erfordernissen an eine Genauigkeit und/oder Häufigkeit der Erfassung durch das Positionserfassungsmittel aufweisen. Die zwei oder mehr Kontrollbereiche können, müssen aber nicht, eine unterschiedliche Art und/oder Anzahl und/oder Sensitivität der Positionserfassungsmittel aufweisen - je nach Anforderung an die Art der Überwachung. So kann ein erster Kontrollbereich ein Be- und/oder Entladebereich sein mit hohen Anforderungen an die Genauigkeit der Überwachung, während für einen zweiten Kontrollbereich als reinem Transportbereich eine niedrigere Genauigkeit ausreichend ist. Die Positionsnachverfolgung kleinerer Transporteinheiten erfordert bei gleicher Bewegungsgeschwindigkeit eine höhere Genauigkeit als diejenige größerer Transporteinheiten.

Gemäß einer Ausführungsform kann die Anlage manuelle Förderelemente umfassen und/oder die Transporteinheiten (2.1) automatisiert bewegbar sind. Der Begriff manuelles Förderelement umfasst jegliches Transportelement/-mittel das keine komplett automatische Fördertechnik ist, sondern einen Bediener erfordert (Castorflächen, Kugelrollenflächen, Slave-Paletten o.ä. und auch Gabelstapler oder andere Flurförderfahrzeuge). Die erfindungsgemäße Lösung eignet sich jedoch auch für eine Positionsbestimmung auf nicht-manuellen Förderelementen, z.B. um Abweichungen vom beabsichtigten Transportweg (z.B. durch unkontrolliertes Rutschen auf Förderflächen, Blockierungen, ...) zu erkennen und zu signalisieren. Die automatisierte Bewegung kann durch Fahrzeuge (AGV, Gabelstapler, ...) oder durch andere Fördermittel erreicht werden.

Gemäß einer Ausführungsform kann ein Anzeigen der erfassten Position für eine ausgewählte identifizierte und/oder erfasste Transporteinheit erfolgen. Hierbei kann ein zusätzliches Kameraabbild verknüpft werden mit der Abbildung des Hintergrundsystems oder das Hintergrundsystem kann Positionsanweisungen zum einfachen Auffinden an einen Bediener geben.

Ausführungsformen der Erfindung werden nachfolgend anhand der Figuren beispielsweise näher erläutert. Dabei zeigen:
- Figur 1: schematisch einen Sortierbereich für Transporteinheiten innerhalb eines Flughafens;
- Figur 2: eine Transporteinheit;
- Figuren 3a, 3b: Transportanweisungen für eine identifizierte Transporteinheit; und
- Figur 4: eine Anlage mit zwei Kontroll- bzw. Bearbeitungsbereichen.

Die nachstehend detailliert beschriebenen Ausführungsbeispiele beziehen sich auf eine Flughafenanlage 6 mit ULD-Transporteinheiten 2. Die Erfindung ist jedoch nicht auf Flughafen beschränkt, sondern für eine breite Palette von Anlagen 6 und Transporteinheiten 2 in anderen Logistikbereichen, z.B. in der Kommissionierung oder in der Postsortierung, insb. im Paket- und Päckchenbereich, anwendbar.

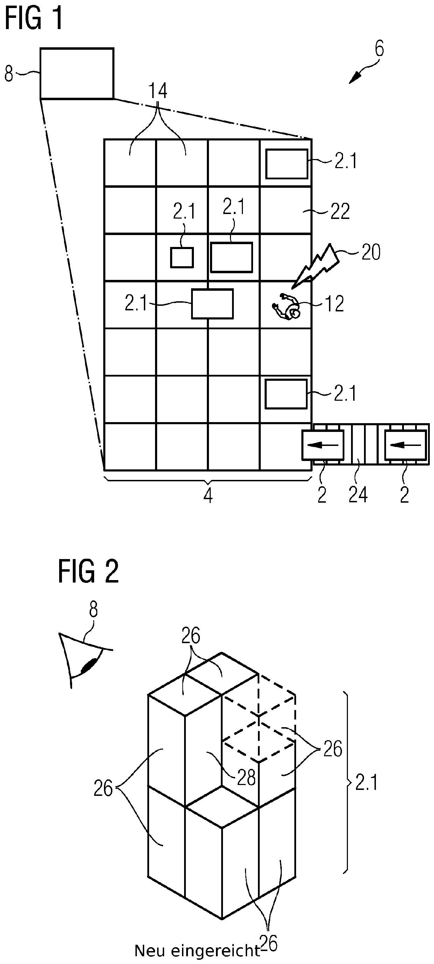

Figur 1 zeigt gemäß einer Ausführungsform einen Sortierbereich 4 für ULDs 2 innerhalb einer Flughafenanlage 6. Die ULDs 2 werden auf einer Zuführstrecke 24 dem Sortierbereich 4 zugeführt. Die Sortier-(Zwischen-)Ziele von Flughafen-ULDs 2 werden bestimmt durch die Sortierkriterien der ULDs 2 welche durch die Sortierinformation ihrer Beladungs-Stückgüter 26 (Koffer, Cargo) bestimmt werden, jede ULD 2 ist eindeutig markiert. Das Bewegen der ULDs 2 in der Flughafenanlage 6 erfolgt je nach Bereich manuell, manuell unterstützt oder durch Fördermittel gesteuert, d.h. mit einem Transportmittel. Die ULDs 2 werden sowohl direkt sortiert als auch zwischengelagert.

Beim Einbringen, beim Übergang zwischen dem automatischen und (semi-)manuellen Bereichen 24, 4 wird mit Erfassungstechnik (Handscanner, Erfassungstor, ...) eine ULD 2 initial erfasst (erstes Erfassen). Das initiale Erfassen erfolgt entweder stets an gleicher Position (Erfassungstor o.ä.) oder an einer veränderlichen Position (Handscanner der zusätzlich zu den Scandaten eine Position mitliefert) - wichtig ist nur, dass zum initialen Erfassungszeitpunkt die Position ermittelbar und somit das Sortierkriterium dieser nun identifizierten ULD 2.1 bekannt ist. Die erfassten Daten werden an ein Hintergrundsystem übergeben. Wenn das initiale Erfassen in Zusammenhang mit dem Einbringen der ULDs 2 in den Kontrollbereich 4 erfolgt, sind sämtliche ULDs 2.1 im Kontrollbereich 4 identifiziert. So wird die Erfassung und Klassifizierung weiterer Objekte 12 im Kontrollbereich 4 erleichtert.

Im Kontrollbereich 4 werden die ULDs 2, 2.1 zu ihren Sortierzielen bewegt und allenfalls zwischengelagert. Der Sortierbereich 2 wird durch Erfassungstechnik 8 in kurzen Zeitintervallen, d.h. quasi fortlaufend erfasst und die Positionen und/oder Positionsänderungen der erfassten ULDs 2, 2.1 werden abgebildet, so dass die Position und Identität einer einmal identifizierten und lokalisierten ULD 2.1, die im Anschluss bewegt wird, nachverfolgt werden kann und somit zu jedem Erfassungszeitpunkt die Position der identifizierten ULD 2.1 und der übrigen Objekte 2, 12 bekannt ist. Das Hintergrundsystem bildet dann Position und Identität jeder einmal identifizierten ULD 2.1 ab, ohne dass die Erfassungstechnik 8 selbst zum erneuten Auslesen des Sortierkriteriums bzw. der ULD-Identität, d.h. zur Identifizierung der identifizierten ULD 2.1 in der Lage sein muss. Das Erfassen der Position erfolgt nach Ablauf einer Taktzeit, wenn das Erfassungsmittel 8 eine Positionsänderung detektiert oder in Antwort auf einen Befehl.

Die Erfassungstechnik 8 erfasst die Position der ULD 2, 2.1 ohne dass eine gesonderte Markierung der ULDs 2.1, 2 erforderlich ist, ist also ein Positionserfassungsmittel 8 und muss die einzelnen ULDs 2, 2.1 innerhalb des Kontrollbereichs 4 eindeutig voneinander und vom Hintergrund abgrenzen und lokalisieren können. Basierend auf der initial bekannten Position wird die Identität der ULDs 2.1 zugeordnet, da Positionsänderungen bei einer ausreichenden Erfassungsrate inkrementell sind, so dass die Zuordnung eindeutig ist. Prinzipiell kann eine Identifizierung der ULD 2 aber auch erst später erfolgen.

Alle Elemente (ULDs 2, Ladung 26, weitere Objekte 12) die sich in dem Kontrollbereich 4 befinden und dem Hintergrundsystem bekannt sind, werden quasi-permanent verfolgt und ihre Positionen werden fortlaufend vom Hintergrundsystem abgebildet. Der Kontrollbereich 4 umfasst höchstens den Erfassungsbereich des Positionserfassungsmittel 8, bei dem die erforderliche Sensitivität und Auflösung gewährt ist. Durch Heranziehen weiterer Positionserfassungsmittel 8 kann der Kontrollbereich 4 erweitert werden. Der Kontrollbereich 4 kann auch kleiner gefasst werden.

Als Positionserfassungsmittel 8 eignet sich insbesondere eine Lidar-Sensoren umfassende Einheit 8. Es können jedoch auch andere Systeme, z.B. ein Kamerasystem (Time-of-Flight-Kamera, gewöhnliche Kameras, ...), Lichtgitter oder optische Sensoren - einzeln oder kombiniert - verwendet werden. Kamerasysteme funktionieren zur Positionsverfolgung allerdings nur dann gut, wenn der Kontrast der ULDs 2 untereinander, aber auch zur Umgebung stets ausreichend ist, da nur so eine eindeutige Positionsnachverfolgung durch das Hintergrundsystem gewährleistet ist.

Lidar-Einheiten 8 bei denen ein Laser eine Punktwolke erzeugt eignen sich besonders gut, da die Kontrastproblematik nicht relevant ist und zudem eine sehr gute Tiefenauflösung erzielt werden kann. Lidar-Sensoren 8 sind zudem kommerziell für unterschiedliche Anforderungen an die Sensitivität der Erfassung erhältlich. Der Rechenaufwand hält sich auch bei hoher Abtastrate in Grenzen und es existieren bewährte Verfahren für die Optimierung der Messwerte (Rauschunterdrückung, Hintergrundkorrektur, Lagekorrektur-Transformation).

Lidar-Sensoren 8 erlauben zusätzlich zum Erfassen der Position das Erfassen der dreidimensionalen Form der Objekte 2, 12 im Kontrollbereich 4. Die Form kann auch mit Stereo-Kameras 8 oder anderen Mitteln erfasst werden. Optische Kameras 8 haben jedoch den Nachteil, dass personenbezogene Daten erfasst werden. Ein Lidar-Einheit 8 erkennt keine Gesichter, so dass keine Privatsphären- bzw. Datenschutz-Problematik besteht. Da sich Lidar-Einheiten 8 sehr gut eignen für die Erstellung eines Oberflächenmodells und daher dazu, Abstände zwischen einzelnen Objekten 2, 2.1, 12 zu ermitteln, ist ein sehr genaues Abbild der Belegungssituation durch das Hintergrundsystem möglich. Die Kontrastproblematik optischer Kameras besteht nicht.

Das Positionserfassungsmittel 8 erfasst nicht nur ULDs 2, 2.1 im Erfassungsbereich 4, sondern auch weitere Objekte 12, auch Personen 12. Das Hintergrundsystem ist ausgestaltet zum Erkennen und allenfalls Klassifizieren der erfassten weiteren Objekte, so dass bei Gefahr eine Warnung ausgegeben werden kann. Betritt eine Person den Kontrollbereich 4, wird dies vom Hintergrundsystem erkannt und alle automatischen Bewegung rund um die Person (plus Sicherheitsbereich) können angehalten werden, indem der von der Person 12 belegte Bereich des Kontrollbereichs 4 sowie ein allfälliger Sicherheitsbereich für automatisierte ULD-Bewegungen gesperrt wird. Durch die Person veranlasste manuelle Bewegungen der ULD 2 werden nun von LiDAR-System 8 erfasst und an das Hintergrundsystem gesendet.

Zudem kann durch das Erfassungssystem 8 überwacht werden ob Personen sich in einem Bereich befinden, der im Mischbetrieb genutzt wird. Dies bringt den Vorteil mit sich, dass automatische Bewegungen in diesem Bereich mit Personen vermieden werden können.

Zur Vermeidung gefährlicher Situation erfolgt die Ausgabe einer Warnung, falls ein weiteres Objekt 12 in unmittelbarer Nähe einer ULD 2 angeordnet ist. Vorzugsweise ist das das Hintergrundsystem oder die erfassende Vorrichtung 8 ausgestaltet zum Erkennen und allenfalls Klassifizieren der erfassten weiteren Objekte 12.

Gemäß einer Ausführungsform wird der Kontrollbereich 4 in Unterbereiche aufgeteilt. Einem oder mehreren der Unterbereiche werden universelle oder Transporteinheit-spezifische Belegungsverboten zugeordnet, d.h. eine spezifische identifizierte ULD 2.1 oder alle ULDs 2 dürfen nicht in diese Unterbereiche bewegt werden, z.B. wenn Personen 12 in oder in der Nähe der Unterbereiche erkannt worden sind. Alternativ oder zusätzlich werden von Objekten 2.1, 2, 12 belegte und/oder freie Unterbereiche angezeigt. Der Füllgrad des Kontrollbereichs 4 wird so überwacht.

Vorzugsweise wird der Kontrollbereich 4 in Unterbereiche eines Rasters aufgeteilt, wobei die Unterbereiche einzelne Plätze darstellen, denen jeweils eine ULD 2 zugeordnet werden kann. Umso kleinteiliger das Raster umso besser kann die Ausnutzung der Unterbereiche durch das Hintergrundsystem gesteuert werden.

Im speziellen Fall von modularen Castorflächen 14 die in einem automatisch-manuellen Mischbetrieb aus einzelnen Förderelementen 14 gebildet werden, umfasst ein Castor-Förderelement 14 ein oder mehrere Unterbereiche.

Figur 2 zeigt eine von einem Lidar-Einheit 8 abgebildete identifizierte Transporteinheit 2.1, die einzelne Ladeeinheiten 26 umfasst und noch nicht vollständig gepackt ist. Der freie Platz 28 kann von der Lidar-Einheit 8 erkannt werden. Anschließend kann dem Bediener die Anweisung gegeben werden, den freien Platz 28 mit einer weiteren Ladeeinheit 26 entsprechender Größe zu beladen, wobei die Größenbestimmung der weiteren Ladeeinheit 26 ebenfalls mit dem Lidar-Einheit 8 erfolgen kann.

Gemäß einer weiteren Ausführungsform wird die Form (Volumen, Ausdehnung) von Transporteinheiten innerhalb des Kontrollbereichs 4 über einen zeitlichen Verlauf mit gleicher oder unterschiedlicher Erfassungsrate wie die Erfassung der Positionen, insbesondere während eines Be- oder Entladevorgangs erfasst. Das Hintergrundsystem erkennt und signalisiert mit einer Meldung und/oder speichert Abweichungen zwischen der initial und später erfassten Form einer spezifischen Transporteinheit 2.1, 2 zu unterschiedlichen Erfassungszeiten. Nichtbeabsichtigte Abweichungen (z.B. Beschädigungen der Transporteinheit 2.1, 2, Diebstahl einzelner Ladeeinheiten 26), aber auch beabsichtigte Abweichungen (z.B. Bestätigung, dass Be- bz. Entladung stattgefunden hat) werden vom Hintergrundsystem erkannt und abgespeichert, so dass später darauf zugegriffen werden kann.

Gemäß einer weiteren Ausführungsform wird das Be- und/oder Entladen einer ULD 2.1 mit Ladeeinheiten 26 innerhalb des Kontrollbereichs ebenso wie die Bewegung der ULD 2.1 vom Hintergrundsystem überwacht werden. Anstelle der Bewegung der ULD 2.1 wird die Bewegung der Ladeeinheit 26 überwacht, wobei zunächst die initiale Erfassung der Position der Ladeeinheit 26 erfolgt und anschließend durch fortlaufende Positionserfassung die Position jeder identifizierten Ladeeinheit bekannt und vom Hintergrundsystem abbildbar ist. Das Be- und Entladen kann ebenso mit auf die Ladeeinheiten bezogenen Anweisungen gesteuert werden.

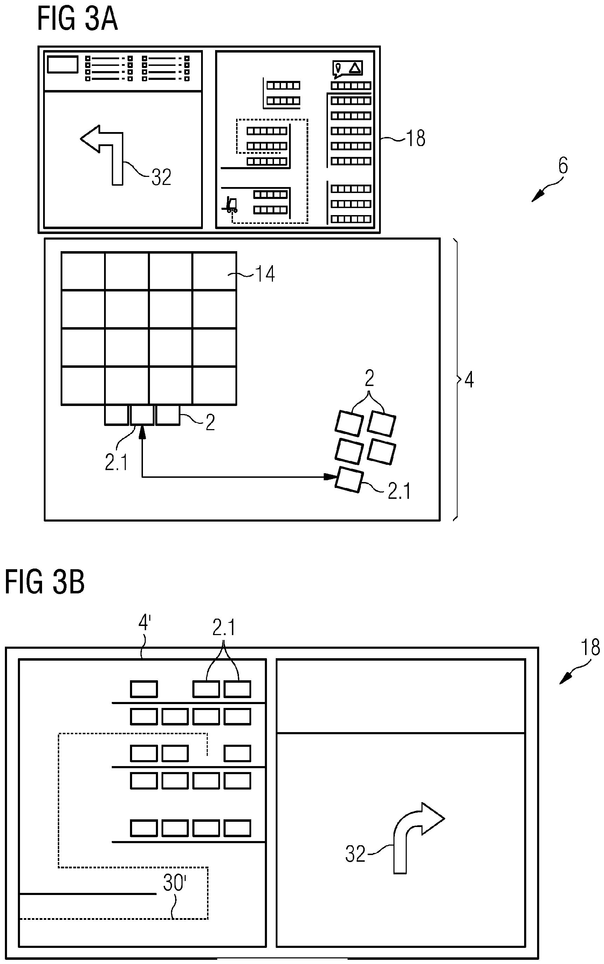

Figur 3a zeigt einen Ausschnitt eines Kontrollbereichs 4, wobei eine identifizierte ULD 2.1 zumindest teilweise manuell bewegt wird. Die Bewegung wird von einem Bediener durchgeführt, wobei dieser auf einem Bildschirm 18 Navigationsanweisungen als Bewegungsbefehl für eine beabsichtige Bewegung der ULD 2.1 erhält. Die Bewegungsanweisungen werden in Abhängigkeit vom Sortierkriterium bestimmt und können beliebig spezifisch ausgegeben werden. Es kann nur das Endziel angegeben werden, oder aber der genaue Weg. Der Belegungsstatus der Unterbereiche wird für die Bewegungsbefehle berücksichtigt, da die ULD 2.1 selbstverständlich nur in bzw. über freie Unterbereiche bewegt werden kann.

Die Bewegungsbefehle können nicht nur an einen menschlichen Bediener, sondern auch von einem Transportfahrzeug (AGV, Gabelstapler, ...) ausgeführt werden. Das Hintergrundsystem wählt dann ein Transportfahrzeug aus, z.B. das ein in der Nähe befindliches, und steuert es über Bewegungsanweisungen der ULD 2.1, welche das Transportfahrzeug ausführt. Damit ist ein Einbeziehen und Steuern der manuellen Prozesse durch das Hintergrundsystem möglich.

Da fortlaufend die Position der identifizierten ULD 2.1 überwacht wird, können im Hintergrundsystem Abweichungen zwischen beabsichtigter und tatsächlich erfasster Bewegung erkannt und mit einer Meldung signalisiert werden. Je kleinteiliger die Bewegungsanweisung, umso geringer ist die Abweichung, ab der eine Meldung signalisiert wird. Wenn als einzige Bewegungsanweisung das Endziel angegeben wird, werden nur große Entfernungen vom Endziel oder eindeutige, aufgrund der Belegungssituation nicht erforderliche Bewegungen in die Gegenrichtung signalisiert.

So wird bei Transportanweisungen an das Bedienpersonal mit Hilfe der Erfassungstechnik verifiziert, ob die korrekte Einheit wie vorgesehen bewegt wird. Eine erkannte Fehlbedienung wird entsprechend signalisiert.

Gemäß einer Ausführungsform kann die erfassten Position einer gesuchten (z.B. weil dringende Beladung des zugeordneten Fluges), identifizierten ULD 2.1 jederzeit angezeigt werden. ULDs 2 können so nicht verloren gehen und die Zeit, die ein Bediener auf der Suche nach einer spezifischen ULD 2.1 ist, wird minimiert.

Optional wird ein zusätzliches Kameraabbild verknüpft mit der Abbildung des Hintergrundsystems oder das Hintergrundsystem kann Positionsanweisungen zum einfachen Auffinden der gesuchten ULD 2.1 an einen Bediener geben.

Gemäß einer Ausführungsform wird im Hintergrundsystem welches vom überlagerten IT-Transportsystem umfasst sein kann eine Verweildauer der identifizierten und/oder der erfassten, aber (noch) nicht identifizierten Transporteinheiten 2.1, 2 in dem Kontrollbereich 4 überprüft. Wenn die Verweildauer einen vorbestimmten Wert überschreitet, wird dies mit einer Meldung signalisiert. So kann das Vergessen von zu lange (d.h. länger als der jeweils vorbestimmte Wert) stehenden ULDs 2.1, 2 verhindert werden, mit oder ohne initiales Erfassen.

Figur 3b zeigt gemäß einer Ausführungsform eine Anzeige 18, welche den Kontrollbereich 4` abbildet. Es werden nicht nur die Bewegungsbefehle 32 angezeigt, sondern auch die beabsichtigte und/oder tatsächliche Bewegung 30' einer Transporteinheit 2.1, 2 im virtuellen Abbild des Kontrollbereichs 4' angezeigt.

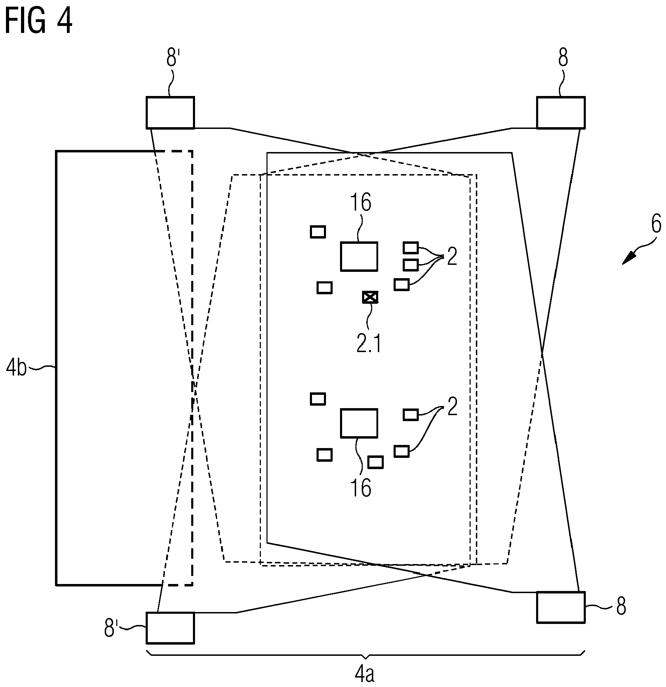

Eine Anpassung der Größe des Kontrollbereichs 4 und/oder der Erfassungsrate und/oder der Anzahl und/oder Sensitivität der Positionserfassungsmittel 8 (technisch oder apparativ) ist sinnvoll da ein größerer Kontrollbereich 4 bzw. eine hohe Erfassungsrate bzw. eine hohe Auflösung mit einem hohen Rechenaufwand verbunden ist. Figur 4 zeigt eine Anlage 6 mit zwei unterschiedlich gefassten Kontrollbereichen 4a, 4b. Der erste Kontrollbereich 4a mit hoher Granularität der Überwachung umfasst den Bereich einer Be- und/oder Entladung von ULDs 4 an Ladestationen 16. Für eine genaue Überwachung des Ladevorgangs sind viele und/oder sensitive Sensoren 8 erforderlich. Der zweite Kontrollbereich 4b umfasst einen Transport- und Lagerbereich 4b der Anlage 6. Da keine Ladevorgänge und somit keine Ladeeinheiten 26 (diese sind ja naturgemäß kleiner als ihre entsprechenden ULDs 2.1, 2) überwacht werden müssen, ist eine geringere Granularität der Überwachung ausreichend.

Die Abgrenzung der Kontrollbereiche 4a, 4b erfolgt entweder durch Auswahl der Positionserfassungsmittel 4, kann aber auch rein technisch durch Einbeziehung von weniger Erfassungsdaten bei der Erfassung des zweiten Kontrollbereichs 4b erfolgen, auch wenn eigentlich eine höhere Sensitivität der Erfassung möglich wäre, da mehr Erfassungsdaten vorliegen. Auf diese Weise kann der Rechenaufwand minimiert werden ohne dass eine apparative Anpassung erforderlich ist.

Mit dem erfindungsgemäßen System und Verfahren ist zu jedem Erfassungszeitpunt immer bekannt, wo sich welche ULD 2.1 in dem Kontrollbereich 4 befindet. Durch die Form- bzw. Volumenbestimmung der Objekte 12, 2, 2.1, 26 im Erfassungsbereich ist die Menge und Größe des an einer Ladestation 16 zu packenden Materials 26, der zu transportierenden ULDs 2.1 sowie der auf ihnen verbleibende Platz 28 zu jedem Erfassungszeitpunkt bekannt. Beim Packen einer ULD 2.1 wird ein ständiges Update des noch zur Verfügung stehende Platzes auf der Palette bereitgestellt. Ob das einer spezifischen ULD 2.1 zugeordnete Material 26 auch tatsächlich auf diese ULD 2.1 geladen worden ist, kann physikalisch nachvollzogen werden.

Kern der Erfindung ist die dauerhafte Positionsverfolgung einer einmal vom Hintergrundsystem identifizierten ULD 2.1 in ausreichend kurzen Erfassungsintervallen durch ein Positionserfassungsmittel 8 für das sich u.a. Lidar-Systeme oder Kamerasysteme eignen. So bildet das Hintergrundsystem die Position der erfassten ULD 2.1 stets ab ohne dass weitere Identifizierungen der ULD 2.1 erforderlich sind. Es können Transportanweisungen an das Bedienpersonal ausgegeben werden und mit Hilfe der Erfassungstechnik 8 kann verifiziert werden, ob die korrekte ULD 2.1 bewegt wird. Eine erkannte Fehlbedienung wird entsprechend signalisiert. Die Kombination aus physikalischer Kontrolle und der Datenverwaltung der IT ermöglicht eine ständig aktuelle Information des Standortes jeder ULD 2.1, 2 im Kontrollbereich 4. Es ist egal ob die ULDs 2, 2.1 automatisch oder aber auch manuell zu einem anderen Platz transportiert wird. Zudem kann durch das Erfassungssystem überwacht werden ob Personen sich in einem Bereich befinden, der im Mischbetrieb genutzt wird. Dies bringt den Vorteil mit sich, dass automatische Bewegungen in einem Bereich, in dem sich Personen befinden vermieden werden können.

ULDs 2.1 können auch bei manueller Verschiebung getrackt/ verfolgt werden. Der Füllgrad der Kontrollbereiche 4 wird abgebildet ohne dass weitere Erfassungsschritte durch das Bedienpersonal erforderlich sind. Der Materialfluss im Kontrollbereich 4 kann kontrolliert werden durch Nachverfolgung der abgebildeten Transporteinheiten 2, 2.1. Fehlbedienungen (Verschieben anderer ULDs 2, Bewegen der vorgesehen ULD 2.1, aber zu falschem Ort) werden vermieden. Bedienpersonal kann bei der Sortierung unterstützt werden durch Ausgabe von Bewegungsbefehlen. Durch Überwachung der Verweildauer der ULDs 2, 2.1 in dem Kontrollbereich 4 werden zu lange nicht bearbeitete ULDs 2, 2.1 erkannt. Der Verlust von Material 2, 2.1, 26 wird vermieden. Der Zustand der ULDs 2, 2.1 kann überwacht werden (Beschädigungskontrolle, Be-/Entladeüberwachung).

Die Erkennung von Personen im Kontrollbereich erlaubt ein Abgrenzen ULDs 2 von Personal, Manipulationen der ULDs 2 können erkannt werden. Zugangsabsicherungen können eingerichtet und automatische Bewegung eingeschränkt werden, indem Unterbereichen Belegungsverbote zugeordnet werden.

Die Verknüpfung der Informationen der initialen Erfassung mit der fortlaufenden Positionserfassung erlaubt die Lokalisierung und Verfolgung von Transporteinheiten 2, 2.1 in Echtzeit. Für eine bessere Visualisierung kann eine Verknüpfung mit einem Kameraabbild erfolgen.

Wenn Bedienpersonal auf der Suche nach einer spezifischen Transporteinheit 2.1 ist, kann die Position vom Hintergrundsystem ausgegeben werden, allenfalls mit zusätzlichen Bewegungsbefehlen für das Bedienpersonal. So wird ein schnelles Auffinden der Transporteinheit erzielt, falsche Platzierungen und Leerfahrten verhindert.

Das Verfahren ist mit anderen Systemen für eine punktgenaue Ortung kombinierbar, so kann ein Handscanner für das initiale Erfassen der Identität der Transporteinheit 2.1 mit einem RFID-Tag markiert werden, um die Position der initialen Erfassung zu bestimmen.

Abweichungen der tatsächlichen Bewegung einer Transporteinheit 2.1 von einer durch die Bewegungsbefehle beabsichtigten Bewegung werden gemäß einer Ausführungsform mit einer Meldung signalisiert.

Das Hintergrundsystem hat gemäß einer Ausführungsform Zugriff auf weitere Informationen, z.B. Flugpläne. So kann die Abfertigung (Be- bzw. Entladevorgänge, Abholung aus Zwischenspeicher, Bewegung zum Airside-Ausgang) gewisser ULDs 2.1 priorisiert werden, das Hintergrundsystem unterstützt das Bedienpersonal durch Anzeige der nächsten Logistikaufgaben und durch Entscheidungsunterstützung beim Zusammenstellen von Fracht. Weitere Informationen (Batteriestand, Priorität von verderblichen Waren oder von Medikamenten, Temperatur für eine Kühlkettenkontrolle) können vom Hintergrundsystem ebenfalls berücksichtigt werden für eine Priorisierung der durchzuführenden Arbeitsschritte.

### Bezugszeichenliste

- 2: Transporteinheit
- 4: Kontrollbereich
- 4a: erster Kontrollbereich, (Be-/Ent-)Ladebereich
- 4b: zweiter Kontrollbereich, Lager-/Transportbereich
- 6: Anlage
- 8: Positionserfassungsmittel, Lidar-Sensor
- 12: weiteres Objekt, Person
- 14: Förderelement
- 16: Ladestation, Workstation
- 18: Anzeige
- 20: Meldung
- 22: Förderelement
- 24: Zuführstrecke, Einbringvorrichtung
- 26: Stückgüter, Ladeeinheiten
- 28: freier Platz
- 30: Bewegung (beabsichtigte, tatsächliche)
- 32: Bewegungsbefehl

## Patentansprüche

1. Verfahren zum Kontrollieren einer Bewegung von Transporteinheiten (2.1, 2) mit zugeordneten Sortierkriterien innerhalb eines Kontrollbereichs (4) einer Anlage (6),
umfassend die Verfahrensschritte:
a) erstes Erfassen von Identität und Zeitstempel einer oder mehrerer Transporteinheiten (2.1) an bekannter, initialer Position, wobei das erste Erfassen von Identität und Zeitstempel, insbesondere in Zusammenhang mit einem Einbringen einer Transporteinheit (2.1) in den Kontrollbereich (4) erfolgt;
b) Bewegen mindestens einer der Transporteinheiten (2.1, 2), insbesondere der identifizierten Transporteinheit (2.1);
c) Erfassen der Positionen der Transporteinheiten (2.1, 2) innerhalb des Kontrollbereichs (4) über einen zeitlichen Verlauf mit einem Positionserfassungsmittel (8) ausgestaltet zum Erfassen von Positionen von Transporteinheiten (2.1, 2) ohne eine gesonderte Markierung der Transporteinheiten;
d) fortlaufendes Übermitteln der erfassten Daten an ein Hintergrundsystem;
e) fortlaufendes Zuordnen der erfassten Positionen der Transporteinheiten (2.1, 2) zu der erfassten Identität der betreffenden Transporteinheit (2.1, 2) durch das Hintergrundsystem ausgehend von der initialen Position;
f) Abbilden der Positionen der Transporteinheiten (2.1, 2), insbesondere der identifizierten Transporteinheit (2.1), in dem Kontrollbereich (4) durch das Hintergrundsystem.

2. Verfahren nach Anspruch 1, **dadurch gekennzeichnet, dass** das Positionserfassungsmittel (8) einen Lidar-Sensor und/oder ein Kamerasystem und/oder ein Lichtgitter und/oder einen optischen Sensor umfasst.

3. Verfahren nach einem der vorangehenden Ansprüche, zudem umfassend den Verfahrensschritt
Erfassen einer Form der identifizierten Transporteinheit (2.1, 2) innerhalb des Kontrollbereichs (4) über einen zeitlichen Verlauf mit dem Positionserfassungsmittel (8) oder einer anderen Vorrichtung ausgestaltet zum Erfassen einer Form von Objekten, insbesondere von Transporteinheiten (2.1, 2).

4. Verfahren nach Anspruch 3, zudem umfassend den Verfahrensschritt
das Hintergrundsystem erkennt und signalisiert mit einer Meldung und/oder speichert Abweichungen der erfassten Form der Transporteinheiten (2.1, 2), insbesondere der identifizierten Transporteinheit (2.1), zu unterschiedlichen Erfassungszeiten.

5. Verfahren nach Anspruch 3 oder 4, zudem umfassend die Verfahrensschritte
- Be- und/oder Entladen einer Transporteinheit (2.1, 2) mit einer oder mehreren Ladeeinheiten innerhalb des Kontrollbereichs;
- Durchführen der Verfahrensschritte a) bis f) für die eine oder mehreren Ladeeinheiten ebenso wie für eine Transporteinheit (2.1).

6. Verfahren nach einem der vorangehenden Ansprüche, zudem umfassend den Verfahrensschritt
im Hintergrundsystem Überprüfen einer Verweildauer der identifizierten und/oder erfassten Transporteinheiten (2.1, 2) in dem Kontrollbereich (4), und Signalisieren eines Überschreitens der Verweildauer über einen vorbestimmten Wert mit einer Meldung.

7. Verfahren nach einem der vorangehenden Ansprüche, zudem umfassend den Verfahrensschritt
Erfassen von weiteren Objekten (12) im Kontrollbereich (4) mit dem Positionserfassungsmittel (8) oder einer anderen Vorrichtung ausgestaltet zum Erfassen von weiteren Objekten (12), insbesondere bewegten Objekten (12) wie Personen, und Übermitteln der erfassten Daten an das Hintergrundsystem.

8. Verfahren nach einem der vorangehenden Ansprüche, zudem umfassend den Verfahrensschritt
das Hintergrundsystem erteilt Anweisungen für eine beabsichtigte Bewegung der identifizierten Transporteinheit (2.1), wobei diese Anweisungen von Bedienpersonal und/oder automatisiert realisiert werden.

9. Verfahren nach Anspruch 7, zudem umfassend den Verfahrensschritt
das Hintergrundsystem erkennt und signalisiert mit einer Meldung Abweichungen zwischen der beabsichtigten und tatsächlich erfassten Bewegung.

10. Verfahren nach einem der vorangehenden Ansprüche, zudem umfassend den Verfahrensschritt
Aufteilen des Kontrollbereichs (4) in Unterbereiche und Zuordnen von universellen oder Transporteinheit-spezifischen Belegungsverboten zu einem oder mehreren der Unterbereiche und/oder Anzeigen von freien und/oder besetzten Unterbereichen.

11. Verfahren nach einem der vorangehenden Ansprüche, **dadurch gekennzeichnet, dass**
die Anlage (6) zwei oder mehr Kontrollbereiche (4a, 4b) mit unterschiedlichen Erfordernissen an eine Genauigkeit und/oder Häufigkeit der Erfassung durch das Positionserfassungsmittel (8) aufweist.

12. Verfahren nach Anspruch 10, **dadurch gekennzeichnet, dass** die zwei oder mehr Kontrollbereiche (4a, 4b) eine unterschiedliche Art und/oder Anzahl und/oder Sensitivität der Positionserfassungsmittel (8) aufweisen.

13. Verfahren nach einem der vorangehenden Ansprüche, **dadurch gekennzeichnet, dass**
die Anlage (6) manuelle Förderelemente (14) umfasst und/oder die Transporteinheiten (2.1) automatisiert bewegbar sind.

14. Verfahren nach einem der vorangehenden Ansprüche, zudem umfassend den Verfahrensschritt
Anzeigen der erfassten Position für eine ausgewählte identifizierte und/oder erfasste Transporteinheit 2.1, 2.

15. System zum Kontrollieren einer Bewegung von Transporteinheiten (2.1, 2) mit zugeordneten Sortierkriterien in einer Anlage (6), umfassend
- ein Mittel zum Erfassen von Identität und Zeitstempel einer oder mehrerer Transporteinheiten (2.1, 2) an bekannter, initialer Position;
- ein Positionserfassungsmittel (8) ausgestaltet zum Erfassen von Positionen von Transporteinheiten (2.1, 2) innerhalb des Kontrollbereichs (4) über einen zeitlichen Verlauf ohne dass eine gesonderte Markierung der Transporteinheiten erforderlich ist;
- Mittel zum Übertragen der erfassten Daten an ein Hintergrundsystem, wobei das Hintergrundsystem ausgestaltet ist zum fortlaufenden Zuordnen der erfassten Positionen der Transporteinheiten (2.1, 2) zu der erfassten Identität der betreffenden Transporteinheit (2.1, 2) und zum Abbilden der erfassten Positionen der identifizierten Transporteinheiten (2.1, 2); wobei
das System ausgestaltet ist zur Durchführung des Verfahrens nach einem der Ansprüche 1 bis 14.
